# EUROPÄISCHE PATENTSCHRIFT

(11) **EP 0 872 378 B1**
(45) Veröffentlichungstag und Bekanntmachung des Hinweises auf die Patenterteilung: **17.10.2001**
(21) Anmeldenummer: 97121255.0
(22) Anmeldetag: 03.12.1997
(51) Int. Cl.: B60P 1/64

(54) **Vorrichtung zum Be- und Entladen eines Transportfahrzeugs mit einem Behälter**
Device for loading and unloading a vehicle with a container
Dispositif de chargement et de déchargement d'un véhicule avec un conteneur

(30) Priorität: 07.03.1997 DE 19709501
(43) Veröffentlichungstag der Anmeldung: 21.10.1998
(73) Patentinhaber: Max Aicher GmbH Entsorgungstechnik, 83395 Freilassing (DE)
(72) Erfinder: Henkel, Gerald, Dr.-Ing., 92637 Weiden (DE)
(74) Vertreter: Schieschke, Klaus, Dipl.-Ing.

(56) Entgegenhaltungen:
- EP-A- 0 221 600
- FR-A- 761 089
- FR-A- 1 127 451
- FR-A- 2 682 336
- US-A- 1 387 163

## Beschreibung

Die Erfindung bezieht sich auf eine Vorrichtung zum Be- und Entladen eines Transportfahrzeugs, insbesondere eines Abfallsammelfahrzeugs, mit einem Behälter, insbesondere einem Wechselcontainer, mit einem auf einem Fahrzeugrahmen angeordneten Kipprahmen, welcher über eine Antriebseinheit um einen im Endbereich des Fahrzeugrahmens angeordneten Drehpunkt schwenkbar ist. Auf dem Kipprahmen ist mindestens ein Kupplungselement geführt, welches mit einem Kopplungsglied zur Verbindung mit dem Wechselcontainer versehen ist, wobei das Kupplungselement durch mindestens eine im Kipprahmen angeordnete Endloskette hin- und herbewegbar ist und wobei die Endloskette über zwei im Abstand voneinander liegende, mit mindestens einem Antrieb verbundene Kettenräder antreibbar ist.

Ausgangspunkt der Erfindung ist insbesondere ein Abfallsammelfahrzeug mit Wechselcontainer. Während das Abfallsammelfahrzeug mit einem aufgenommenen leeren Wechselcontainer die Sammeltour fortsetzt, kann der Weitertransport des gefüllten Wechselcontainers über weite Strecken zu einer Entleerungsstelle mit üblichen Transportfahrzeugen auf der Straße, auf der Eisenbahn oder per Schiff erfolgen.

Als Stand der Technik ist es bekannt, ein derartiges Sammelfahrzeug z.B. als Frontlader auszubilden. Hier werden Abfallbehälter mit einer Hub-Kippeinrichtung über das Fahrerhaus gehoben, geschwenkt und in einen Einfülltrichter durch Kippen entleert. Eine Presseinrichtung schiebt dann den Abfall in horizontaler Richtung in den Wechselcontainer.

Weiterer bekannter Stand der Technik ist ein sog. Seitenlader, bei welchem sich die Beladeeinrichtung im Allgemeinen an der Fahrzeugseite hinter dem Fahrerhaus befindet. Die gefüllten Abfallbehälter werden seitlich aufgenommen und in den Einfülltrichter hinter dem Fahrerhaus gekippt. Beim Front- und Seitenlader sind die Beladeeinrichtung, der Einfülltrichter und die Presse meist fest mit dem Fahrzeug verbunden.

Weiterhin sind auch Hecklader als Abfallsammelfahrzeuge mit Wechselcontainern bekannt, wobei sich die Beladeeinrichtung mit Einfülltrichter und Presse am Heck des Fahrzeugs befindet. Beim Wechseln des Containers muss in diesem Fall die gesamte Einrichtung abgestellt oder weggeklappt werden.

Besonders vorteilhaft ist ein Abfallsammelfahrzeug dann, wenn es den Container unabhängig von bestimmten kranbestückten Plätzen mit bordeigenen Mitteln wechseln kann. Dabei sollen diese bordeigenen Mittel möglichst folgende Bedingungen erfüllen:
- Das Entleeren des vollen Containers soll auch durch das Abfallsammelfahrzeug selbst möglich sein,
- der volle Container muss sich auf dem Boden absetzen und ein leerer bzw. teilgefüllter Wechselcontainer vom Boden aufnehmen lassen,
- das Absetzen auf einen und das Aufnehmen von einem Transportanhänger muss möglich sein,
- ebenso muss das Be- und Entladen von Eisenbahnwaggons mit dem Abfallsammelfahrzeug möglich sein,
- der reine Transport der Wechselcontainer, ihre Handhabung und ihre Entleerung müssen mit gängigen Fahrzeugen und Einrichtungen möglich sein und dürfen nicht durch spezielle Anbauten für die bordeigenen Mittel behindert werden.

Vorgenannte Bedingungen könnten durch ein übliches Abrollkipperfahrzeug (nach DIN 30722) mit Abrollbehältern als Wechselcontainer erfüllt werden, wenn nicht der eingesetzte Hakenarm genau vor der Öffnung des Wechselcontainers läge, durch welche der Abfall von der Presse in den Container transportiert wird.

Zur Lösung dieses Problems ist bereits ein Abfallsammelfahrzeug bekannt (deutsches Gebrauchsmuster G 92 07 193.7), bei welchem der Hakenarm als Rahmen gestaltet ist, so dass der Pressenstößel den freien Teil im mittleren Bereich des Rahmens durchfahren kann.

Da derartige Hakenarme bzw. Hakenlifte im Allgemeinen ein höheres Gewicht aufweisen, sind zur Vermeidung dieses Nachteils Kettenlifte im Einsatz. Als Zugmittel dient hier eine Endloskette. Es sind Konstruktionen bekannt (DE 25 11 108 C2, EP 0 002 056 A1, EP 0 087 846 A1), bei welchen eine Ladekette mit ihrem einen Ende an der Endloskette befestigt ist, während das andere Ende einen Haken trägt, der in eine entsprechende Halterung am vorderen Ende des Wechselcontainers greifen kann. Die Ladekette kann jedoch nur Zug aufnehmen und hängt beim Aufnehmen eines Wechselcontainers vom Boden über ein Kettenrad am Fahrzeugheck nach unten.

Damit der Wechselcontainer aber auch vom Kipprahmen heruntergeschoben werden kann, greift der Haken an der Ladekette an seiner Unterseite in einen Nocken, welcher an der Endloskette befestigt ist. Eine Schubkraft kann also nur bis zum Kettenrad am Heck des Fahrzeugs aufgebracht werden. Soll damit der Wechselcontainer auf ein anderes Fahrzeug umgesetzt werden, muss das Kettenliftfahrzeug entsprechend sehr dicht an das Übernahmefahrzeug heranfahren.

Es besteht auch die Möglichkeit, das Aufnahmeglied (Haken) oder ein anders gestaltetes Kupplungsglied zur Aufnahme des Wechselcontainers im vorderen Bodenbereich als Schlitten oder als Laufkatze auszubilden, welche im Kipprahmen geführt und an der Endloskette befestigt ist. Lässt man dann das über der Endloskette stehende Aufnahmeglied vorkragen, so kann man es über das Kettenrad am Kipprahmen am Heck des Fahrzeugs hinausfahren, wobei die Schubkräfte an diesem Ende auch außerhalb des Bereichs der Endloskette wirksam sind (DE 23 02 199 C2, DE 28 23 947). Nachteil dieser Lösung ist, dass der Wechselcontainer nicht bis an das andere Ende des Kipprahmens gezogen werden kann, sondern um den Betrag der Überkraglänge vor dem Kettenrad stehen bleiben muss.

Weiterer Stand der Technik sind Konstruktionen, welche sowohl als Hakenlift als auch als Kettenlift einsetzbar sind (z.B. EP 0 564 403 A1).

Ausgehend von dem vorgenannten Stand der Technik besteht die Aufgabe der vorliegenden Erfindung darin, eine bordeigene Wechseleinrichtung mit Kettenlift zu schaffen, welche die vorgenannten Bedingungen erfüllt und außerdem auf raumsparende Weise ein Vorkragen des mit dem Wechselcontainer zu verbindenden Kopplungsgliedes ermöglicht.

Diese Aufgabe wird erfindungsgemäß dadurch gelöst, dass das Kupplungselement mit mindestens einer Zahnstange versehen ist und dass die Zahnstange eine derartige Länge aufweist, dass die Kettenräder über die Endloskette hinaus von dem Kupplungselement überfahrbar sind. Das Kupplungselement, beispielsweise mindestens ein Schlitten oder mindestens eine rollengeführte Laufkatze, ist damit nicht fest mit der Endloskette verbunden, sondern die Zugkräfte der Endloskette werden über eine Zahnstange auf den Schlitten oder die Laufkatze übertragen. Dabei ist die Verzahnung der Zahnstange vorteilhafterweise so gestaltet, dass die Kettenräder über die Endloskette hinaus vom Schlitten oder der Laufkatze überfahren werden können.

Die vertikalen Querkräfte auf das Obertrum der Endloskette infolge des unter Kraft stehenden Zahneingriffs im Bereich zwischen den Kettenrädern werden vorteilhafterweise von einer Kettenführung aufgenommen.

Als Endlosketten können beispielsweise Rollenketten Anwendung finden, wobei nach einer Lösung die Zähne der Zahnstange am Schlitten oder an einer Laufkatze in jede zweite Teilungslücke zwischen die Rollen der Rollenketten greifen. An diesen Stellen sind die Zähne an den Kettenrädern entfernt.

Für eine geringe Bauhöhe des Kipprahmens muss der Kettenraddurchmesser möglichst klein sein. Da sein Teilkreisdurchmesser in etwa proportional Kettenteilung x Zähnezahl des Kettenrades ist und eine Mindestzähnezahl des angetriebenen Kettenrades an der Kraftübertragung auf die Endloskette beteiligt sein soll, werden in weiterer Ausgestaltung der Erfindung zweckmäßigerweise zwei kleinere Ketten mit geringerem Teilungsabstand parallel angeordnet. Hierdurch ergibt sich außerdem eine Verbesserung der Sicherheit.

In weiterer Ausgestaltung der Erfindung besteht auch die Möglichkeit, dass die Zähne der Zahnstange die Kettenkraft an Außenlaschenpaketen einer Rollenkette übertragen. Die Kettenbolzen werden dabei wie im Normalfall im Wesentlichen auf Abscherung beansprucht. Bei dieser Alternativlösung ergibt sich der Vorteil, dass die Kettenräder eine noch kleinere Abmessung aufweisen können.

In weiterer Ausgestaltung der Erfindung kann das Kopplungsglied des Kupplungselements auf ein Gegenkopplungsglied des Wechselcontainers abgestellt und mit einem gewichtsbelasteten Sicherheitsschwenkriegel versehen sein.

Die Erfindung wird nachfolgend anhand von in der Zeichnung dargestellten Ausführungsbeispielen näher beschrieben. In der Zeichnung zeigen:
- Fig. 1: eine schematische Seitenansicht eines Abfallsammelfahrzeugs mit Wechselcontainer;
- Fig. 2: eine Seitenansicht einer über Kettenräder geführten Endloskette und eines mit einer Zahnstange versehenen Kupplungselements;
- Fig. 3: eine Draufsicht auf die Ausführungsform nach Fig. 2;
- Fig. 4: eine Seitenansicht eines Teils des Wechselcontainers und des Kupplungselements im Bereich der zweiten Achse A₂ des Abfallsammelfahrzeugs, teils gebrochen;
- Fig. 5: eine schematische Seitenansicht des abgestellten Wechselcontainers im Bereich der letzten Fahrzeugachse A₄ des Abfallsammelfahrzeugs;
- Fig. 6: eine weitere Ausführungsmöglichkeit der Gestaltung der Zahnstange des Kupplungselements in schematischer Seitenansicht;
- Fig. 7: eine Draufsicht auf die Ausführungsform nach Fig. 6;
- Fig. 8: einen Abstellvorgang des Wechselcontainers auf den Boden in verschiedenen Ablauffolgen;
- Fig. 9: einen Ablaufvorgang des Transports des Wechselcontainers von einem Fahrzeug auf ein anderes Fahrzeug in schematischer Seitenansicht;
- Fig. 10 und 11: eine Seitenansicht bzw. Draufsicht zum Übertragen von Wechselcontainern von Abfallsammelfahrzeugen auf einen Eisenbahnwaggon.

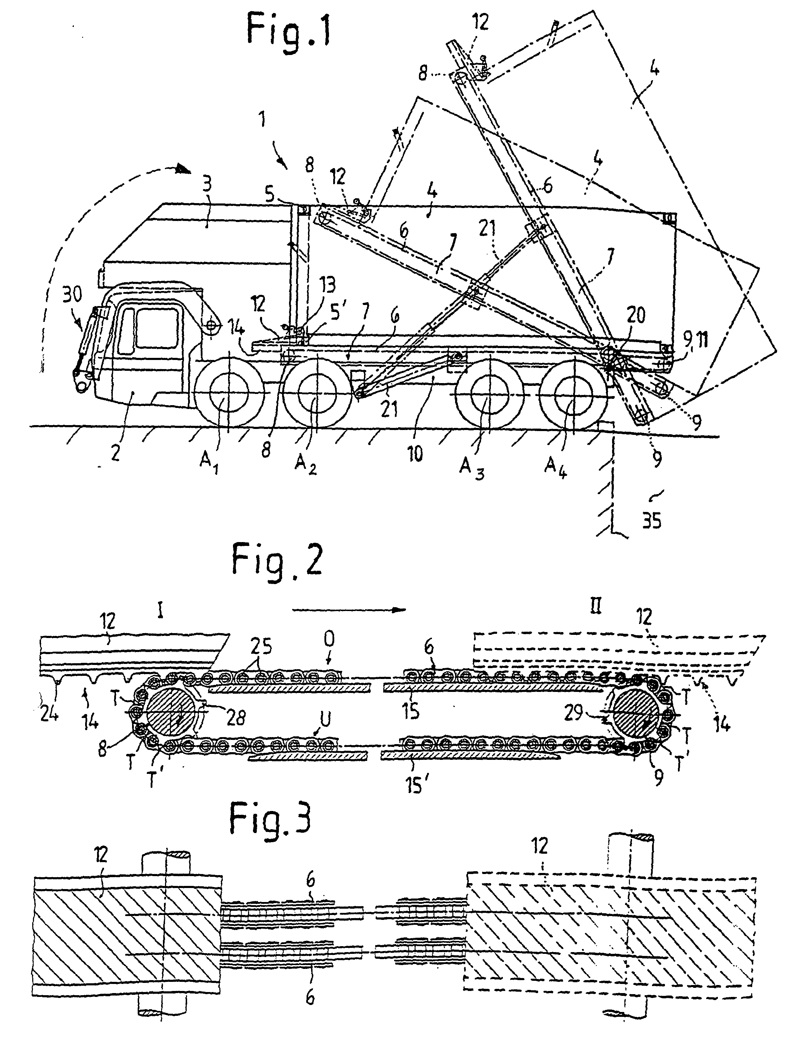

In Fig. 1 ist in schematischer Seitenansicht ein als Frontlader ausgebildetes Sammelfahrzeug 1 mit z.B. vier Achsen A₁, A₂, A₃, A₄ dargestellt. Dieses Abfallsammelfahrzeug ist in der Lage, nicht gezeigte Abfallbehälter über eine Frontladeeinrichtung 30 in Pfeilrichtung über das Fahrerhaus 2 zu heben und in einen Einfülltrichter 3 durch Kippen zu entleeren. Im unteren Teil des Einfülltrichters 3 hinter dem Fahrerhaus 2 schiebt eine nicht dargestellte Presseinrichtung den Abfall in horizontaler Richtung durch eine verschließbare Öffnung in einen Wechselcontainer 4, welcher auf dem Fahrzeug 1 gelagert ist.

Das Fahrzeug 1 weist hierzu hinter dem Fahrerhaus 2 einen Fahrzeugrahmen 10 auf, auf welchem sich ein Kipprahmen 7 befindet. Dieser Kipprahmen 7 dient zur Lagerung des Wechselcontainers und ist um einen im Endbereich des Fahrzeugrahmens 10 angeordneten Drehpunkt 20 schwenkbar und zwar mit Hilfe einer Antriebseinheit 21, z.B. zwischen den Achsen A₂ und A₃.

Durch die Antriebseinheit 21 lässt sich damit der Wechselcontainer 4 aus der dargestellten Position in die beiden gestrichelten Positionen schwenken, wodurch nach Öffnen des Endbereichs des Wechselcontainers der im Wechselcontainer 4 befindliche Abfall in einen Bunker 35 abgegeben werden kann.

Verfügt der Wechselcontainer 4 über Befestigungsmöglichkeiten für Hebezeuge, wie z.B. Eckbeschläge 5 und 5', so besteht die Möglichkeit, dass er mit Hebezeugen, wie beispielweise Kräne oder Mobilkräne und Spraeder, leicht vom Fahrzeug heruntergenommen bzw. wieder auf dieses aufgesetzt werden kann, wodurch andere Be- und Entlademöglichkeiten gegeben sind.

In dem Kipprahmen 7 ist ein Kupplungselement 12 geführt, welches mit einem Kopplungsglied 13 zur Verbindung mit dem Wechselcontainer 4 versehen ist. Das Kupplungselement 12, beispielsweise ein Schlitten, ist durch mindestens eine im Kipprahmen 7 angeordnete Endloskette 6 hin- und herbewegbar. Diese Endloskette 6 läuft über zwei im Abstand voneinander angeordnete Kettenräder 8 und 9, wobei das fahrerhausseitige Kettenrad 8 vorteilhafterweise als Umlenkrad und das heckseitige Kettenrad 9 als Antriebsrad 9 ausgebildet ist. Dieses heckseitige Kettenrad 9 ist am Ende des Kipprahmens 7 hinter dem Fahrzeugrahmen mit einem Antriebsmotor, insbesondere einem Hydraulik-Getriebemotor 11, verbunden.

Insbesondere aus Fig. 2 geht hervor, dass das Kupplungselement 12, d.h. der Schlitten, mit mindestens einer Zahnstange 14 auf der Unterseite versehen ist. Diese Zahnstange 14 weist eine derartige Länge auf, dass die Kettenräder 8 und 9 über die Endloskette 6 hinaus von dem Kupplungselement 12 überfahrbar sind. Aus Fig. 1 ist in diesem Zusammenhang ersichtlich, wie durch diese besondere Gestaltung des Kupplungselements mit der Zahnstange 14 das Kettenrad 8 überfahren wird.

Findet nach Fig. 2 und 3 als Endloskette 6 eine Rollenkette Anwendung, so besteht in einer ersten Ausführungsform der Erfindung die Möglichkeit, dass Zähne 24 der Zahnstange 14 in jede zweite Teilungslücke T zwischen Rollen 25 der Rollenkette greifen. Die Zähne 28 bzw. 29 der Kettenräder 8 und 9 können sich jeweils in die zwischen zwei Teilungslücken T liegende Teilungslücke T' einlagern.

Die vertikalen Querkräfte auf das Obertrum O der Endloskette 6 infolge des unter Kraft stehenden Zahneingriffs im Bereich zwischen den Kettenrädern 8 und 9 werden vorteilhafterweise von einer Kettenführung 15 aufgenommen. Weiterhin kann das Untertrum U durch eine zweite Kettenführung 15' geführt sein.

Um eine geringe Bauhöhe des Kipprahmens 7 zu ermöglichen, muss der Durchmesser der Kettenräder 8 und 9 möglichst klein sein. Da der Teilkreisdurchmesser der jeweiligen Kettenräder 8 und 9 ungefähr proportional der Kettenteilung x Zähnezahl des jeweiligen Kettenrades ist und eine Mindestzähnezahl des angetriebenen Kettenrades 8 bzw. 9 an der Kraftübertragung auf die Endloskette 6 beteiligt sein soll, werden gemäß Fig. 3 vorteilhafterweise zwei kleinere Ketten parallel angeordnet. Hierdurch ergibt sich eine zusätzliche Verbesserung der Sicherheit.

Durch die Endloskette 6, welche mit der Zahnstange 14 über deren Verzahnung 24 zusammenwirkt, ergibt sich die Möglichkeit, dass auf einfache Weise das Kupplungselement 12, d.h. der Schlitten, aus der in Fig. 2 dargestellten Position I in die Position II bewegt wird, wobei beide Positionen so definiert sein können, dass die Kettenräder 8 und 9 über die Endloskette 6 hinaus von dem Kupplungselement, d.h. dem Schlitten 12, überfahrbar sind. Damit kann vorteilhafterweise der Wechselcontainer von dem einen Ende des Kipprahmens 7 bis zu dem anderen Ende und umgekehrt bewegt werden, so dass eine vorteilhafte zusätzliche Überkraglänge vorliegt.

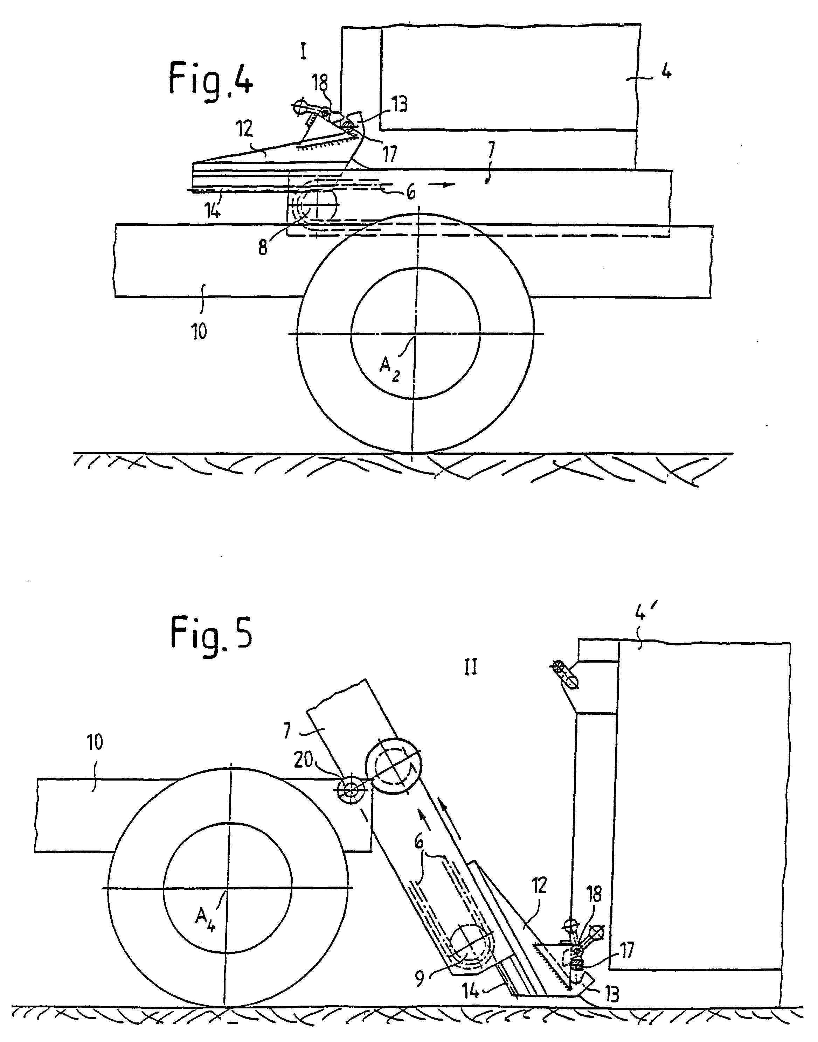

In den Fig. 4 und 5 ist die Position I bzw. II näher dargestellt: Nach Fig. 4 befindet sich der Schlitten 12 in der Position I. Hier liegt der Wechselcontainer 4 in der Lage, wie sie in Fig. 1 dargestellt ist und überragt die Achse A₂. Der Schlitten 12 greift über sein Kopplungsglied 13 in ein Gegenkopplungsglied 17 des Wechselcontainers, wobei zur Absicherung der Kopplung ein gewichtsbelasteter Schwenkriegel 18 vorgesehen ist. In der in Fig. 4 dargestellten Position I überkragt also der Schlitten 12 das Kettenrad 8 um einen solchen Betrag, dass der Wechselcontainer 4 gemäß Fig. 1 möglichst dicht im Bereich des Einfülltrichters 3 liegt. Der Schlitten 12 kann dabei auch im Kipprahmen 7 zusätzlich im unteren Bereich des Einfülltrichters 3 geführt sein (sh. auch Fig. 1).

In der Position II nach Fig. 5 ist der Kipprahmen 7 um den Drehpunkt 20 des Fahrzeugrahmens 10 geschwenkt, wobei sich der Schlitten 12 in der hintersten Position befindet, in welcher er mit seinem Kopplungsglied 13 das Kettenrad 9 überragt. In dieser Position kann ein neuer auf dem Boden abgestellter Wechselcontainer 4' aufgenommen werden, indem das Kopplungsglied 13 das Gegenkopplungsglied 17 des Wechselcontainers 4' erfasst und diese Kopplung nach Anheben des Wechselcontainers 4' durch Schwenken des Kipprahmens 7 durch den Schwenkriegel 18 gesichert wird.

Nunmehr kann über die Zahnstange 14 und das angetriebene Kettenrad 9 der Schlitten 12 in Pfeilrichtung nach oben gezogen werden, wodurch der Container 4' auf den Kipprahmen 7 heraufgezogen wird. Nach einem gewissen Zeitraum dieser Bewegung kann nach Fig. 1 über den Antrieb 21 der Kipprahmen 7 aus der Schräglage wieder in die waagerechte Position bewegt werden, so dass sich im Abschluss beider Bewegungen ein neuer Wechselcontainer 4' auf dem Sammelfahrzeug 1 befindet.

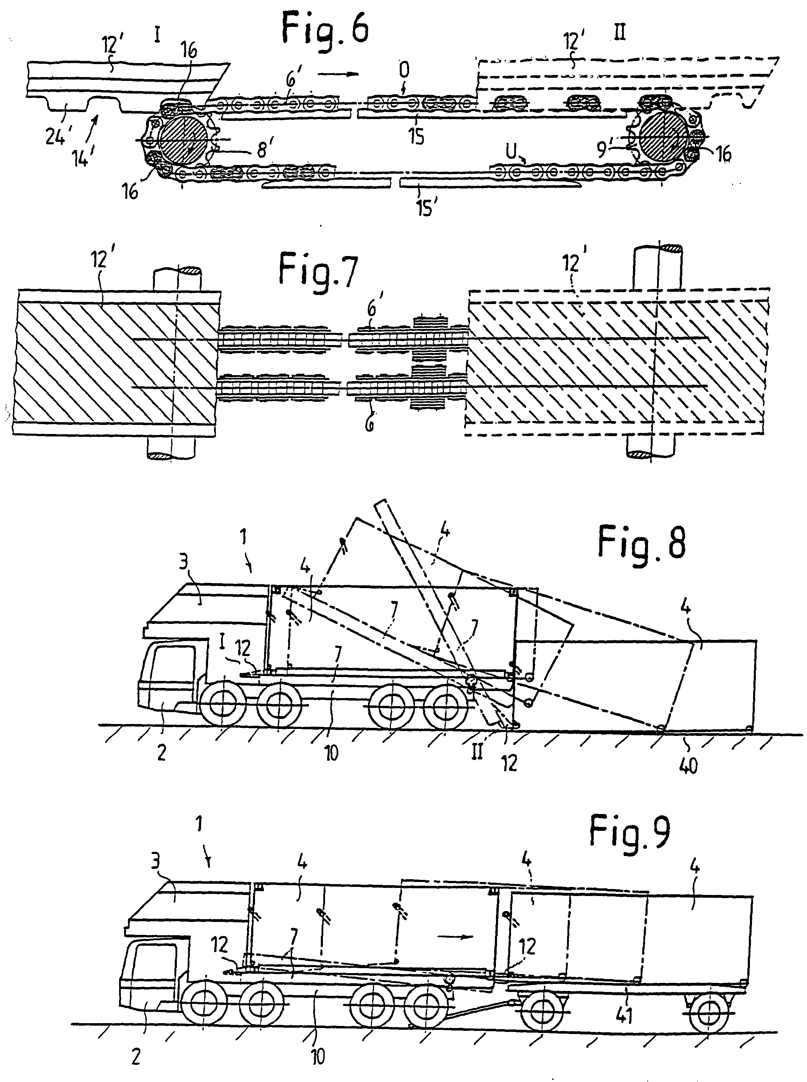

Fig. 6 und 7 zeigen eine andere Ausführungsform der Gestaltung der Kettenräder 8' und 9' bzw. der Zahnstange 14': Wiederum findet eine Endloskette 6' in Form einer Rollenkette Anwendung. Hier sind die Zähne 24' der Zahnstange 14' so gestaltet, dass sie in Außenlaschenpakete 16 der Endloskette 6' eingreifen. Hierdurch lässt sich wiederum das Kupplungselement, d.h. der Schlitten 12, aus der Position I in die Position II mit Hilfe der Endloskette 6' und der Zahnstange 14' bewegen bzw. in die Ausgangsposition zurückführen.

Analog der Ausführungform nach Fig. 3 finden wiederum vorteilhafterweise zwei kleinere Ketten 6' mit geringerem Teilungsabstand Anwendung. Weiterhin sind entsprechend der Ausführungsform nach Fig. 2 und 3 die Endlosketten 6' im oberen Trum O durch eine Kettenführung 15 und im unterem Trum U durch eine Kettenführung 15' abgestützt.

Fig. 8 zeigt das Absetzen eines Wechselcontainers 4 von dem Abfallsammelfahrzeug 1 auf den Boden 40. Es ist zu erkennen, dass der mit dem Wechselcontainer gekoppelte Schlitten 12 in seinen Endpositionen I und II den Kipprahmen 7 überragt.

Fig. 9 zeigt das Umsetzen eines Wechselcontainers 4 von einem Sammelfahrzeug 1 auf ein anderes Fahrzeug 41. Das Abfallsammelfahrzeug 1 braucht vorteilhafterweise nicht so dicht wie beim bisher bekannten Stand der Technik an das Fahrzeug 41 herangefahren zu werden, da der mit dem Wechselcontainer 4 verbundene Schlitten 12 erfindungsgemäß - wie vorstehend ausgeführt - in seinen Endpositionen den Kipprahmen 7 überragt.

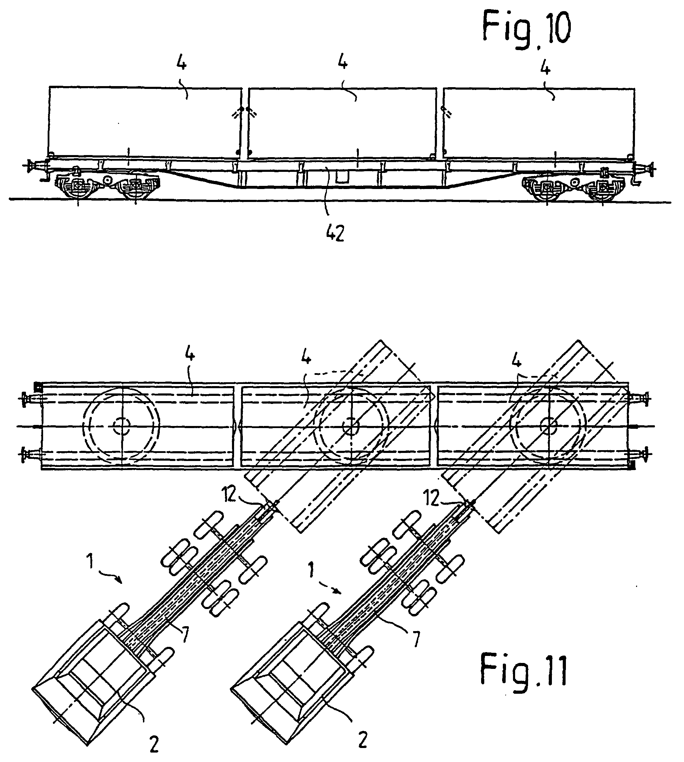

Nach Fig. 10 und 11 besteht auch die Möglichkeit, mit Hilfe der erfindungsgemäßen Vorrichtung, d.h. dem mit der Zahnstange 14 bzw. 14' versehenen Schlitten 12 bzw. 12', Wechselcontainer 4 von einem jeweiligen Abfallsammelfahrzeug 1 auf einen Eisenbahnwaggon 42 und umgekehrt zu laden.

Durch die erfindungsgemäße Vorrichtung, d.h. durch die besondere Gestaltung des Kupplungselements, welches als Schlitten oder als rollengeführte Laufkatze ausgebildet sein kann, besteht im Zusammenwirken zwischen der Zahnstange mit den betreffenden Kettenrädern die Möglichkeit, dass die Endbereiche des Kipprahmens 7 auf einfache Weise überfahren werden, wobei die volle Funktionsfähigkeit des Kopplungsgliedes 13 beibehalten wird. Hierbei weisen das Kupplungselement 12 bzw. 12' und die Zahnstange 14 bzw. 14' eine derartige Länge auf, dass die Kettenräder 8, 9 bzw. 8' und 9' über die Endloskette 6 bzw. 6' hinaus von dem Kupplungselement überfahren werden können.

Die gesamte Anordnung ist einfach aufgebaut und robust gestaltet, so dass sich neben einer hohen Effektivität eine lange Lebensdauer ergibt.

## Patentansprüche

1. Vorrichtung zum Be- und Entladen eines Transportfahrzeugs, insbesondere eines Abfallsammelfahrzeugs (1), mit einem Behälter, insbesondere einem Wechselcontainer (4),
- mit einem auf einem Fahrzeugrahmen (10) angeordneten Kipprahmen (7), welcher über eine Antriebseinheit (21) um einen im Endbereich des Fahrzeugrahmens (10) angeordneten Drehpunkt (20) schwenkbar ist,
- mindestens einem durch den Kipprahmen (7) geführten Kupplungselement (12, 12'), welches mit einem Kopplungsglied (13) zur Verbindung mit dem Wechselcontainer (4) versehen ist,
- wobei das Kupplungselement (12, 12') durch mindestens eine im Kipprahmen (7) angeordnete Endloskette (6, 6') hin- und herbewegbar ist,
- und wobei die Endloskette über zwei im Abstand voneinander liegende, mit mindestens einem Antrieb (11) verbundene Kettenräder (8, 9; 8', 9') antreibbar ist,
**dadurch gekennzeichnet,**
**dass** das Kupplungselement (12, 12') mit mindestens einer Zahnstange (14, 14') versehen ist und
**dass** die Zahnstange (14, 14') eine derartige Länge aufweist, dass die Kettenräder (8, 9; 8', 9') über die Endloskette (6, 6') hinaus von dem Kupplungselement (12, 12') überfahrbar sind.

2. Vorrichtung nach Anspruch 1, wobei die Endloskette (6, 6') als Rollenkette ausgebildet ist,
**dadurch gekennzeichnet,**
**dass** die Zähne (24) der Zahnstange (14) in jede zweite Teilungslücke (T) zwischen Rollen (25) der Rollenkette und die Zähne (28, 29) der Kettenräder (8, 9) jeweils in die zwischen zwei Teilungslücken (T) liegende Teilungslücke (T') der Rollenkette greifen (Fig. 2, 3).

3. Vorrichtung nach Anspruch 1, wobei die Endloskette (6, 6') als Rollenkette ausgebildet ist,
**dadurch gekennzeichnet,**
**dass** die Zähne (24') der Zahnstange (14') auf den Eingriff in jedes Außenlaschenpaket (16) der Rollenkette abgestellt sind (Fig. 6, 7).

4. Vorrichtung nach Anspruch 1 und 2 oder 3,
**dadurch gekennzeichnet,**
**dass** die Zahnstange (14; 14') auf der Unterseite des Kupplungselements (12, 12') angeordnet ist.

5. Vorrichtung nach einem oder mehreren der vorhergehenden Ansprüche,
**dadurch gekennzeichnet,**
**dass** zwei Endlosketten (6, 6') mit geringem Teilungsabstand parallel im Kipprahmen (7) angeordnet sind (Fig. 3, 7).

6. Vorrichtung nach einem oder mehreren der vorhergehenden Ansprüche,
**dadurch gekennzeichnet,**
**dass** das Obertrum (O) der Endloskette (6, 6') durch mindestens eine Kettenführung (15) abgestützt ist.

7. Vorrichtung nach Anspruch 6,
**gekennzeichnet durch**
eine Kettenführung (15') für das Untertrum (U) der Endloskette (6, 6').

8. Vorrichtung nach einem oder mehreren der vorhergehenden Ansprüche,
**dadurch gekennzeichnet,**
**dass** das Kupplungselement (12, 12') als Schlitten oder als rollengeführte Laufkatze ausgebildet ist.

9. Vorrichtung nach einem oder mehreren der vorhergehenden Ansprüche,
**dadurch gekennzeichnet,**
**dass** das fahrerhausseitige Kettenrad (8) als Umlenkrad und das heckseitige Kettenrad (9) als Antriebsrad ausgebildet ist.

10. Vorrichtung nach Anspruch 9,
**dadurch gekennzeichnet,**
**dass** das heckseitige Kettenrad (9) am Kipprahmenende hinter dem Fahrzeugrahmen (10) mit einem Antriebsmotor, insbesondere einem Hydraulik-Getriebemotor (11), verbunden ist.

11. Vorrichtung nach Anspruch 1,
**dadurch gekennzeichnet,**
**dass** Kopplungsglied (13) des Kupplungselements (12, 12') auf ein Gegenkopplungsglied (17) des Wechselcontainers (4) abgestellt und mit einem gewichtsbelasteten Sicherheitsschwenkriegel (18) versehen ist.

## Claims

1. Device for loading and unloading a transport vehicle, in particular a refuse-collecting vehicle (1), with a container, in particular an interchangeable container (4),
- with a tipping frame (7), which is arranged on a vehicle frame (10) and is pivotable by a drive unit (21) about a pivot point (20) arranged in the end region of the vehicle frame (10),
- with at least one coupling element (12, 12'), which is guided by the tipping frame (7) and is provided with a coupling member (13) for connection to the interchangeable container (4),
- the coupling element (12, 12') being movable to and fro by at least one endless chain (6, 6') arranged in the tipping frame (7),
- and the endless chain being drivable by two chain wheels (8, 9; 8', 9') lying at a distance from one another and connected to at least one drive (11),
**characterised in that** the coupling element (12, 12') is provided with at least one toothed rack (14, 14') and **in that** the toothed rack (14, 14') has a length such that it is possible for the coupling element (12, 12') to travel past the chain wheels (8, 9; 8', 9') beyond the endless chain (6, 6').

2. Device according to Claim 1, the endless chain (6, 6') being designed as a roller chain, **characterised in that** the teeth (24) of the toothed rack (14) engage in every second gap (T) between rollers (25) of the roller chain and the teeth (28, 29) of the chain wheels (8, 9) engage in each case in the roller-chain gap (T') lying between two gaps (T) (Figs. 2, 3).

3. Device according to Claim 1, the endless chain (6, 6') being designed as a roller chain, **characterised in that** the teeth (24') of the toothed rack (14') are adapted for engagement in each outer plate stack (16) of the roller chain (Figs. 6, 7).

4. Device according to Claim 1 and 2 or 3, **characterised in that** the toothed rack (14; 14') is arranged on the underside of the coupling element (12, 12').

5. Device according to one or more of the preceding claims, **characterised in that** two endless chains (6, 6') with a small pitch are arranged parallel in the tipping frame (7) (Fig. 3, 7).

6. Device according to one or more of the preceding claims, **characterised in that** the upper run (O) of the endless chain (6, 6') is supported by at least one chain guide (15).

7. Device according to Claim 6, **characterised by** a chain guide (15') for the lower run (U) of the endless chain (6, 6').

8. Device according to one or more of the preceding claims, **characterised in that** the coupling element (12, 12') is designed as a slide or as a roller-guided travelling trolley.

9. Device according to one or more of the preceding claims, **characterised in that** the driver's-cab-side chain wheel (8) is designed as a deflection wheel and the rear-end-side chain wheel (9) is designed as a drive wheel.

10. Device according to Claim 9, **characterised in that** the rear-end-side chain wheel (9) is connected to a drive motor, in particular a hydraulic geared motor (11), at the end of the tipping frame, behind the vehicle frame (10).

11. Device according to Claim 1, **characterised in that** coupling member (13) of the coupling element (12, 12') is adapted for a counter-coupling member (17) of the interchangeable container (4) and is provided with a weighted pivoting safety catch (18).

## Revendications

1. Dispositif pour charger et décharger un véhicule de transport, notamment un véhicule (1) de ramassage des ordures ménagères, comportant un récipient, notamment un conteneur interchangeable (4), et comportant
- un cadre basculant (7), qui est monté sur un châssis (10) du véhicule et peut être amené à pivoter, par l'intermédiaire d'une unité d'entraînement (21), autour d'un centre de rotation (20) disposé dans la partie d'extrémité du châssis (10) du véhicule,
- au moins un élément d'accouplement (12, 12'), qui est guidé par le cadre basculant (7) et comporte un organe d'accouplement (13) pour la liaison avec le conteneur interchangeable (4),
- l'élément d'accouplement (12, 12') étant déplaçable en va-et-vient sous l'action d'au moins une chaîne sans fin (6, 6') disposée dans le cadre basculant (7); et
- la chaîne sans fin pouvant être entraînée par l'intermédiaire de deux roues à chaîne (8, 9; 8', 9') qui sont situées à distance l'une de l'autre et sont reliées à au moins un dispositif d'entraînement (11),
**caractérisé en ce**
**que** l'élément d'accouplement (12, 12') comporte au moins une crémaillère (14, 14'), et
que la crémaillère (14, 14') possède une longueur telle que l'élément d'accouplement (12, 12') peut se déplacer au-delà des les roues à chaîne (8, 9; 8', 9') par l'intermédiaire de la chaîne sans fin (6, 6').

2. Dispositif selon la revendication 1, dans lequel la chaîne sans fin (6, 6') est agencée sous la forme d'une chaîne à rouleaux,
**caractérisé en ce**
**que** les dents (24) de la crémaillère (14) engrènent dans chaque second intervalle de division (T) entre des rouleaux (25) de la chaîne à rouleaux et que les dents (28, 29) des roues à chaîne (8, 9) engrènent respectivement dans les intervalles de séparation (T') de la chaîne à rouleaux, qui sont situés entre deux intervalles de séparation (T) (figures 2, 3).

3. Dispositif selon la revendication 1, dans lequel la chaîne sans fin (6, 6') est agencée sous la forme d'une chaîne à rouleaux,
**caractérisé en ce**
**que** les dents (24') de la crémaillère (14') sont agencées pour s'engager dans chaque paquet d'éclisses extérieures (16) de la chaîne à rouleaux (figures 6, 7).

4. Dispositif selon la revendication 1, 2 ou 3,
**caractérisé en ce**
**que** la crémaillère (14; 14') est disposée sur la face inférieure de l'élément d'accouplement (12,12').

5. Dispositif selon une ou plusieurs des revendications précédentes,
**caractérisé en ce**
**que** deux chaînes sans fin (6, 6') ayant un intervalle de séparation faible sont disposées en parallèle dans le cadre basculant (7) (figures 3, 7).

6. Dispositif selon une ou plusieurs des revendications précédentes,
**caractérisé en ce**
**que** le brin supérieur (o) de la chaîne sans fin (6, 6') est supporté par au moins un guide-chaîne (15).

7. Dispositif selon la revendication 6,
**caractérisé par**
un guide-chaîne (15') pour le brin inférieur (U) de la chaîne sans fin (6, 6').

8. Dispositif selon une ou plusieurs des revendications précédentes,
**caractérisé en ce**
**que** l'élément d'accouplement (12, 12') est agencé sous la forme d'un chariot ou d'un chariot roulant guidé sur des rouleaux.

9. Dispositif selon une ou plusieurs des revendications précédentes,
**caractérisé en ce**
**que** la roue à chaîne (8), située du côté de la cabine du conducteur, est agencée en tant que roue de renvoi et que la roue à chaîne (9) située à l'arrière est agencée en tant que roue d'entraînement.

10. Dispositif selon la revendication 9,
**caractérisé en ce**
**que** la roue à chaîne (9) située à l'arrière est reliée sur l'extrémité du cadre basculant en arrière du châssis (10) du véhicule, à un moteur d'entraînement, notamment un moto-réducteur hydraulique (11).

11. Dispositif selon la revendication 1,
**caractérisé en ce**
**que** l'organe de couplage (13) de l'élément de couplage (12, 12') est adapté à un organe de couplage antagoniste (17) du conteneur interchangeable (4) et comporte un verrou pivotant de sécurité (18) chargé par un poids.
